# EUROPÄISCHE PATENTSCHRIFT

(11) **EP 1 524 752 B1**
(45) Veröffentlichungstag und Bekanntmachung des Hinweises auf die Patenterteilung: **07.12.2005**
(21) Anmeldenummer: 03023388.6
(22) Anmeldetag: 16.10.2003
(51) Int. Cl.: H02K 5/22

(54) **Klemmenkasten für ein Pumpenaggregat**
Terminal box for a pump unit
Boîtier de bornes pour une unité de pompage

(43) Veröffentlichungstag der Anmeldung: 20.04.2005
(73) Patentinhaber: GRUNDFOS A/S, DK-8850 Bjerringbro (DK)
(72) Erfinder: Andersen, Lars Kannegaard, 8900 Randers (DK)
(74) Vertreter: Hemmer, Arnd

(56) Entgegenhaltungen:
- EP-A- 1 338 740
- DE-A- 3 430 756
- US-A- 5 146 650
- PATENT ABSTRACTS OF JAPAN vol. 012, no. 124 (E-601), 16. April 1988 (1988-04-16) & JP 62 250840 A (FUJI ELECTRIC CO LTD), 31. Oktober 1987 (1987-10-31)

## Beschreibung

Die Erfindung betrifft einen Klemmenkasten für ein Pumpenaggregat.

Pumpenaggregate, insbesondere Umwälzpumpen, wie sie in Heizungsanlagen eingesetzt werden, weisen üblicherweise einen Klemmenkasten auf, in welchem die elektrischen Anschlüsse und die Steuerungs-bzw. Regelungsmodule für die Pumpe untergebracht sind. Die elektrischen Anschlüsse, beispielsweise Anschlussklemmen sind üblicherweise unter einem Deckel angeordnet, sodass sie gegen Feuchtigkeit geschützt sind. Zum elektrischen Anschluss müssen die Anschlussleitungen durch Öffnungen in das Innere des Klemmenkastens eingeführt werden und bei geöffnetem Deckel können die Anschlussleitungen dann mit den Klemmen verbunden werden. Anschließend wird der Deckel aufgesetzt und verschraubt, sodass die elektrischen Anschlüsse geschützt sind.

Beim beschriebenen Anschließen des Pumpenaggregates ist die Handhabung des Klemmenkastendeckels oftmals problematisch, da der abgenommene Deckel während der Montage abgelegt oder festgehalten werden muss, was insbesondere bei schwer zugänglichen Einbauorten problematisch ist. Es sind zwar schwenkbar mit dem Klemmenkasten verbundene Deckel bekannt, diese haben jedoch den Nachteil, dass sie sich bei schwer zugänglichen Einbauorten unter Umstönden nicht vollständig öffnen lassen, oder den Zugang zum Inneren des Klemmenkastens versperren und so den Anschluss des Pumpenaggregates erschweren.

Ein solcher Klemmenkasten ist beispielsweise aus DE 34 30 756 A1 bekannt, welcher einen Kabelanschlusskasten offenbart, bei welchem der Deckel über ein Filmscharnier mit der Grundplatte verbunden ist.

EP 1 338 740 A1 offenbart einen elektrischen Verteilerkasten für Kraftfahrzeuge, bei welchem ein schwenkbarer Deckel an einem Gelenk mit dem Unterteil des Anschlusskastens verbunden ist. An dem Unterteil ist ein runder Gelenkbolzen ausgebildet, welcher von einem korrespondierenden Gelenkabschnitt an dem Deckel umgriffen wird, so dass der Deckel um den Gelenkbolzen gedreht werden kann. Der Gelenkabschnitt an dem Decke! ist dabei so ausgebildet, dass er auf den Gelenkbolzen aufgeklipst ist, so dass er von dem Gelenkbolzen vollständig gelöst werden kann, um den Deckel abzunehmen.

US 5,146,650 offenbart einen weiteren Anschlusskasten, bei welchem ein schwenkbarer Deckel in einem Gelenk drehbar gelagert ist, welches einen federnden Arm aufweist, der die Gelenkbolzen an dem Deckel mit dem Gelenkabschnitt an dem Unterteil des Anschlusskastens in Eingriff hält. Durch Auslenkung des Federarms kann die Verbindung gelöst werden, so dass der Deckel abgenommen werden kann.

Nachteilig bei den vorgenannten Ausgestaltungen ist, dass der Deckel zum bequemen Anschließen von Anschlussleitungen im Inneren der Anschlusskästen entweder vollständig abgenommen oder vollständig geöffnet werden muss. Anderenfalls ist erforderlich, den Deckel mit der Hand festzuhalten, um zu verhindern, dass er sich schwerkraftbedingt schließt. Dies erschwert die Montage an schwer zugänglichen Einbauorten, welche beim Anschuss von Pumpenaggregaten häufig gegeben sind.

Es ist daher Aufgabe der Erfindung einen verbesserten Klemmenkasten für Pumpenaggregate zu schaffen, welcher eine leichte Montage der elektrischen Anschlussleitungen ermöglicht. Diese Aufgabe wird durch einen Klemmenkasten für ein Pumpenaggregat mit den in Anspruch 1 angegebenen Merkmalen gelöst. Bevorzugte Ausführungsformen ergeben sich aus den zugehörigen Unteransprüchen.

Der Erfindungsgemäße Klemmenkasten für ein Pumpenaggregat weist ein Gehäuse und einen über zumindest ein Gelenk schwenkbar mit dem Gehäuse verbundenen Deckel auf. Der Deckel gibt im aufgeschwenkten Zustand eine Öffnung des Gehäuses frei, unter der die zugänglichen Anschlüsse und Module des Klemmenkastens angeordnet werden können. Beispielsweise können unter dem Deckel die Anschlussklemmen zum Verbinden mit elektrischen Anschlussleitungen angeordnet werden. Erfindungsgemäß ist zumindest ein Gelenk, über welches der Deckel an das Gehäuse angelenkt ist, so ausgebildet, dass es eine lösbare Rastverbindung zum Trennen des Deckels von dem Gehäuse aufweist. Diese Ausgestaltung ermöglicht zum einen, den Deckel aufzuklappen, wobei er um das Gelenk verschwenkt, jedoch mit dem Gehäuse des Klemmenkastens verbunden bleibt. So ist es nicht erforderlich beim Öffnen des Klemmenkastens den Deckel festzuhalten oder abzulegen. Zum anderen ermöglicht die erfindungsgemäße Ausgestaltung auch, den Deckel durch Lösen der Rastverbindung in dem Gelenk vollständig von dem Gehäuse des Klemmenkastens zu trennen. Dies hat den Vorteil, dass beispielsweise bei schwer zugänglichen Einbauorten der Deckel vollständig von dem Gehäuse getrennt werden kann, sodass die Öffnung im Gehäuse unter dem Deckel gut zugänglich ist. Insgesamt ermöglicht der erfindungsgemäße Klemmenkasten bei der Montage bzw. beim Anschließen des Pumpenaggregates somit größere Freiheiten, welche auch an schwer zugänglichen Einbauorten den Zugang zum Inneren des Klemmenkastens ermöglichen, da der Deckel nach Belieben aufgeschwenkt oder vollständig vom Gehäuse abgenommen werden kann. Die Rastverbindung in dem Gelenk kann beispielsweise durch elastische Rastnasen oder als Klemmverbindung ausgebildet sein, welche sich bei Überschreiten einer vorbestimmten Klemm- bzw. Lösekraft öffnen lässt, sodass der Deckel im Bereich der Rastverbindung von dem Gehäuse getrennt und nach erfolgter Montage auch leicht wieder mit dem Gehäuse verbunden werden kann.

Dos Gelenk weist zumindest einen Gelenkbolzen auf, welcher um eine Achse schwenkbar in einer Rastaufnahme gelagert ist, wobei der Gelenkbolzen zum Trennen von Deckel und Gehäuse in einer Richtung quer zur Schwenkachse aus der Rastaufnahme entnehmbar ist. Auf diese Weise wird eine lösbare Rastverbindung geschaffen, welche das Gelenk bildet und eine vollständige Trennung von Deckel und Gehäuse ermöglicht. Zum Verschwenken des Deckels bezüglich des Gehäuses dreht sich der Gelenkbolzen in der Rastaufnahme, wobei der Deckel mit dem Gehäuse verbunden bleibt. Wenn der Deckel vom Gehäuse des Klemmenkastens getrennt werden soll, wird der Gelenkbolzen in einer Richtung quer zur Schwenkachse aus der Rastaufnahme bewegt, wobei der Gelenkbolzen bei Überschreiten der Klemm- bzw. Haltekräfte aus der Rastaufnahme außer Eingriff tritt. In der Rastaufnahme können dazu elastische Rastvorsprünge oder Rastelemente angeordnet sein. Zum Wiedereinsetzen des Gelenkbolzens wird dieser wieder in die Rastaufnahme geschoben, wobei eine Kraft aufgebracht werden muss, welche so groß ist, dass wiederum die Widerstände der Rastelemente, beispielsweise Rastnasen, überwunden werden und der Gelenkbolzen wieder mit der Rastaufnahme in Eingriff tritt.

Der Gelenkbolzen weist einen ovalen Querschnitt auf. Diese Ausgestaltung ermöglicht, dass beim Verschwenken ein sich über den Schwenkwinkel des Deckels ändernder Widerstand aufgebaut werden kann, so dass der Deckel in einem bestimmten Öffnungswinkel bzw. Winkelbereich durch Klemmkraft gehalten wird. Dazu wird der Gelenkbolzen mit ovalem Querschnitt vorzugsweise in einer Aufnahme mit zwei gegenüberliegenden Wandungen geführt, deren Abstand zueinander so gewählt ist, dass er kleiner oder gleich der Hauptachse des ovalen Querschnittes, aber größer als die Länge der Nebenachse des ovalen Querschnittes des Gelenkbolzens ist. Dies bewirkt, dass sich der Gelenkbolzen in der Aufnahme leicht drehen lässt, wenn die Nebenachse des ovalen Querschnittes quer zu den Wandungen der Aufnahme verläuft. Wenn der Deckel soweit verschwenkt wird, dass die Hauptachse, das heißt die längere Achse des ovalen Querschnittes quer zu den Wandungen verläuft, kommt der Gelenkbolzen mit seinen weiter voneinander beabstandeten Umfangsbereichen an den Wandungen der Aufnahme zur Anlage und es kommt zu einer Klemmung des Gelenkbolzens in der Aufnahme, welche den Schwenkwiderstand erhöht und den Deckel in der entsprechenden Schwenkposition durch Klemmkraft festhält. Auf diese Weise wird ein unbeabsichtigtes Zuklappen des Deckels bei Anschluss des Pumpenaggregates verhindert, der Deckel muss nicht festgehalten werden, sondern verbleibt selbsttätig in der geöffneten Stellung.

Die Rastaufnahme ist vorzugsweise als Nut ausgebildet, in welche der Gelenkbolzen in einer Richtung quer zur Schwenkachse einsetzbar ist, wobei in der Nut zumindest ein Rastvorsprung ausgebildet ist, welcher den eingesetzten Gelenkbolzen hintergreift. Der Rastvorsprung ist so ausgebildet, dass er die Nutbreite so verringert, dass sie geringer als der Durchmesser des Gelenkbolzens ist, sodass dieser in der Nut gehalten wird. Der Rastvorsprung, der Gelenkbolzen und/oder die Nutwandungen sind jedoch derart elastisch ausgebildet, dass der Gelenkbolzen bei entsprechendem Kraftaufwand über den Rastvorsprung hinwegbewegt und aus der Nut entnommen werden kann. Vorzugsweise sind Gelenkbolzen, Rastvorsprung und/oder die Wandungen der Rastnut aus Kunststoff ausgebildet. Die Wandungen der Rastnut sind im Falle eines Gelenkbolzens mit nichtkreisförmigem Querschnitt so voneinander beabstandet, dass der Abstand größer als der geringste Durchmesser des Gelenkbolzens aber kleiner als der größte Durchmesser des Gelenkbolzens ist, sodass der Gelenkbolzen bei entsprechender Winkelstellung in der Nut eingeklemmt wird und der Deckel in der entsprechenden Schwenkposition gehalten wird. Dazu kann der Gelenkbolzen, wie oben beschrieben, einen ovalen Querschnitt oder an entsprechender Umfangsposition einen anders geformten Vorsprung bzw. eine Durchmessererweiterung aufweisen.

Bevorzugt ist die Rastaufnahme an dem Gehäuse und der Gelenkbolzen an dem Deckel ausgebildet, wobei weiter bevorzugt die Rastaufnahme einstückig mit dem Gehäuse und der Gelenkbolzen einstückig mit dem Deckel ausgebildet sind. Besonders bevorzugt sind sämtliche Bauteile als Kunststoff-Spritzgussteile gefertigt. Die Anordnung der Rastaufnahme an dem Gehäuse und der Gelenkbolzen an dem Deckel ermöglicht eine schlanke Ausgestaltung, da insbesondere eine als Nut ausgebildete Rastaufnahme sich in das Innere des Gehäuses hineinerstrecken kann.

Weiter bevorzugt ist ein Anschlag vorgesehen, welcher den Schwenkwinkel des Deckels in seiner geöffneten Position begrenzt, wobei der Anschlag so angeordnet ist, dass der Deckel im geöffneten Zustand in einer Richtung normal zu der Schwenkachse beabstandet von dem Gelenkbolzen an dem Anschlag zur Anlage kommt. Auf diese Weise bildet der Anschlag einen Auflagerpunkt, welcher dazu dienen kann, den Deckel aus der Rastaufnahme auszuhebeln.

Dazu ist der Deckel bei Anlage an dem Anschlag vorzugsweise weiter verschwenkbar, wobei der Anschlag als Drehpunkt wirkt und der Gelenkbolzen aus der Rastaufnahme herausbewegt wird. Dies bedeutet, dass beim Aufschwenken des Deckels der Deckel zunächst bis zu dem Anschlag um den Gelenkbolzen verschwenkt wird. Bei Anlage an dem Anschlag wird der Deckel weiter verschwenkt, wobei nun die Anlage an dem Anschlag als Drehpunkt bzw. Drehachse wirkt und auf diese Weise der Gelenkbolzen aus der Rastaufnahme ausgehebelt wird. Dabei ist der Anschlag vorzugsweise in der Nähe der Rastaufnahme ausgebildet, sodass, wenn der Deckel beim Verschwenken an seinem äußeren freien Ende angefasst wird, ein günstiges Hebelverhältnis gegeben ist, um den Rastbolzen leicht aus der Rastaufnahme aushebeln zu können. Es kann auf diese Weise leicht die erforderliche Lösekraft aufgebracht werden, um den Widerstand der Rastelemente in der Rastaufnahme zu überwinden.

Gemäß einer weiteren bevorzugten Ausführungsform weist das Gelenk einen Hebelarm auf, von dessen zwei einander entgegengesetzten Seiten sich jeweils ein Gelenkbolzen in Richtung der Schwenkachse erstreckt und jeweils in eine Nut der Rastaufnahme eingreift. Diese Ausgestaltung ermöglicht, die Rastaufnahme in das Gehäuse bzw. die Gehäusewandung zu integrieren wobei der Deckel mit dem Hebelarm in eine entsprechende Nut in dem Gehäuse eingreift. Ferner kann der Hebelarm so ausgestaltet werden, dass er bei geschlossenem Deckel vollständig bzw. bündig in das Gehäuse integriert ist.

Weiter bevorzugt sind zwei Hebelarme an zwei einander entgegengesetzten Enden einer Längskante des Deckels vorzugsweise einstückig mit diesem ausgebildet. Diese Anlenkung ermöglicht eine gute Führung beim Verschwenken des Deckels, ohne dass es zu einem Verkannten des Deckels kommt.

Der Anschlag wird vorzugsweise von einem Absatz in dem Gehäuse gebildet, an welchem im geöffneten Zustand des Deckels ein Abschnitt des Hebelarmes zur Anlage kommt. So können alle für die Mechanik des Klemmenkastendeckels erforderlichen Elemente in das Gehäuse integriert werden, ohne dass Teile nach außen hervorstehen.

Der Absatz ist vorzugsweise in der Nähe der Rastaufnahme ausgebildet, um ein günstiges Hebelverhältnis zum Aushebeln des Deckels aus der Rastaufnahme zu ermöglichen.

Nachfolgend wird die Erfindung beispielhaft anhand der beigefügten Figuren beschrieben. In diesen zeigt:
- Fig. 1: eine perspektivische Ansicht des erfindungsgemäßen Klemmenkastens mit geöffnetem Deckel,
- Fig. 2: eine Detailansicht der Anlenkung des Deckels an das Klemmenkastengehäuse im geschlossenen Zustand,
- Fig. 3: eine Detailansicht der Anlenkung des Deckels an das Gehäuse, wobei der Deckel von dem Gehäuse getrennt ist,
- Fig. 4: eine teilweise geschnittene Ansicht der Anlenkung des Deckels an das Klemmenkastengehäuse mit abgenommenen Deckel,
- Fig. 5: eine Schnittansicht der Anlenkung des Deckels an das Gehäuse bei geöffnetem Deckel und
- Fig. 6: eine Ansicht gemäß Fig. 5 mit weiter geöffnetem Deckel.

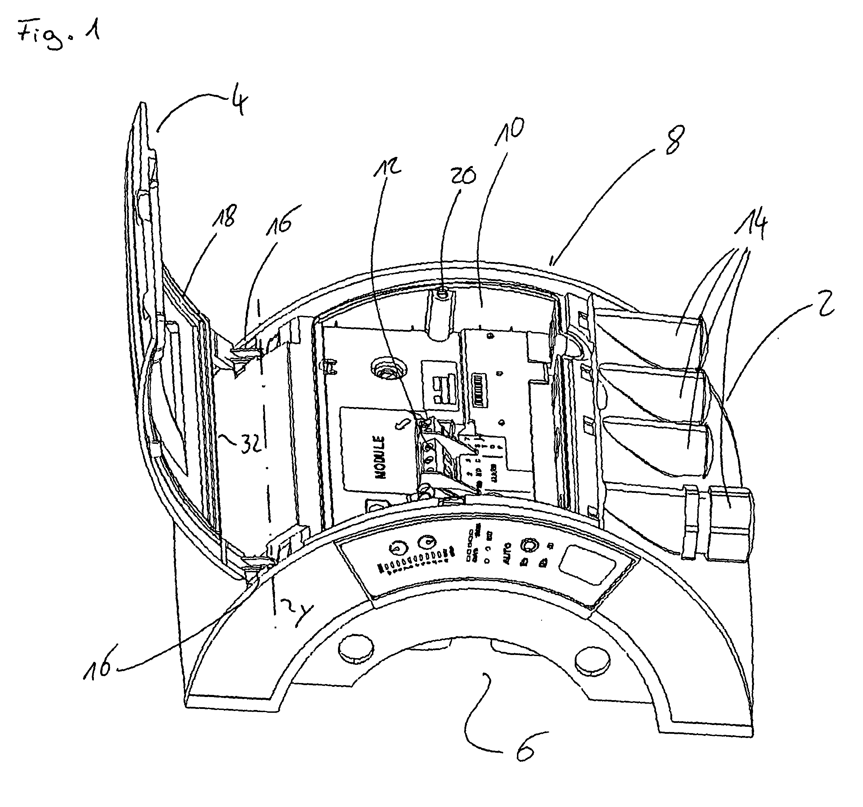

Fig. 1 zeigt eine perspektivische Gesamtansicht eines beispielhaften Klemmenkastens gemäß der Erfindung. Der Klemmenkasten weist ein Gehäuse 2 mit einem schwenkbaren Deckel 4 auf. Der beispielhaft in Fig. 1 gezeigte Klemmenkasten ist gekrümmt ausgebildet und wird mit seiner Unter- bzw. Innenseite 6 an ein Pumpenaggregat angesetzt. Die Erfindung kann jedoch auch bei anders, insbesondere eckig geformten Klemmenkästen verwirklicht werden. An seiner Außenseite 8 weist das Gehäuse 2 eine durch den Deckel 4 verschließbare Öffnung 10 auf, in der Anschlussklemmen 12 angeordnet sind. Anschlussleitungen und Verbindungskabel können durch die Kabeldurchführungen 14 in das Gehäuse 2 eingeführt und dann bei geöffnetem Deckel 4 an die Anschlussklemmen 12 angeschlossen werden. Der Deckel 4 ist an zwei Gelenken 16 gelenkig mit dem Gehäuse 2 verbunden. An seiner Innenseite ist der Deckel 4 mit einer entlang der Kanten verlaufenden Dichtung 18 versehen, um den Deckel 4 im geschlossenen Zustand gegenüber dem Gehäuse 2 abzudichten. Zusätzlich sind in dem Gehäuse 2 zwei Schraublöcher 20 vorgesehen, um den Deckel 4 im geschlossenen Zustand verschrauben zu können.

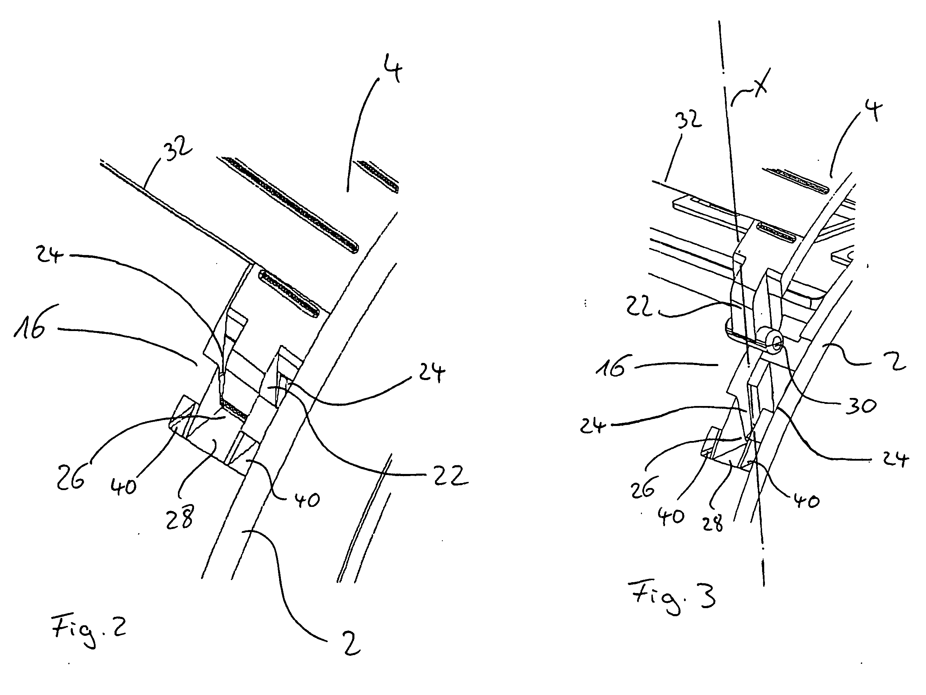

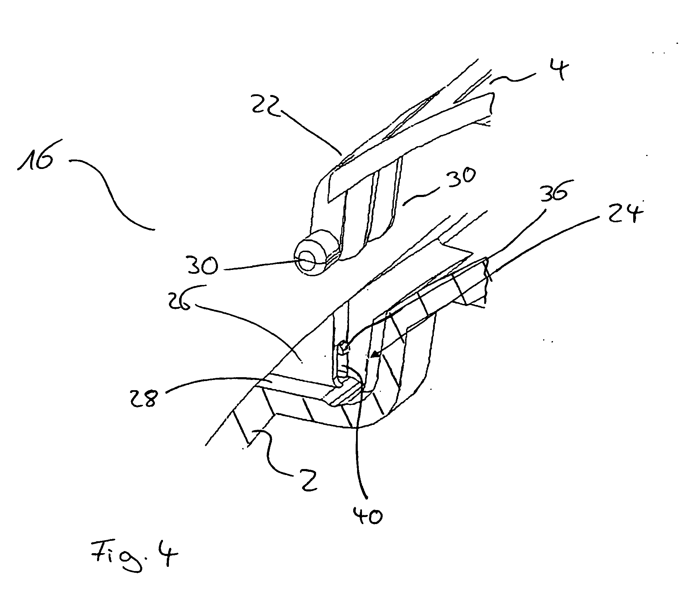

Der Aufbau der Gelenke 16, welche als Rastverbindung ausgebildet sind, wird näher anhand der Figuren 2 bis 6 beschreiben. Fig. 2 zeigt eine Detailansicht des in Fig. 1 gezeigten vorderen Gelenkes 16, wobei der Deckel 4 geschlossen ist, das heißt auf dem Gehäuse 2 aufliegt. Das Gelenk 16 weist einen sich von der Seitenkante des Deckels 4 erstreckenden Gelenkarm 22 auf, welcher in eine Ausnehmung 26 in dem Gehäuse 2 eingreift. Die Ausnehmung 26 erstreckt sich in Bewegungsrichtung des Gelenkarmes 2 beim Öffnen des Deckels 4, sodass der Gelenkarm 22 in der Ausnehmung 26 verschwenkbar ist, wenn der Deckel 4 geöffnet wird. Die Grund- bzw. Bodenfläche der Ausnehmung 26 bildet dabei einen Absatz bzw. eine Anschlagfläche 28 für den Gelenkarm 22, welche den Schwenkwinkel bei Öffnen des Deckels 4 begrenzt. In der Ausnehmung 26 sind an zwei einander gegenüberliegenden Seitenflächen Nuten 24 ausgebildet, in welche an dem Gelenkarm 22 seitlich angebrachte Gelenkbolzen 30 (siehe Fig. 3) eingreifen.

Fig. 3 zeigt eine Detailansicht des Gelenks 16 gemäß Fig. 2, wobei der Gelenkarm 22 aus der Ausnehmung 26 entnommen und somit der Deckel 4 von dem Gehäuse 2 getrennt ist. Der Gelenkarm 22 weist an seinem freien, dem Deckel 4 abgewandten Ende zwei Gelenkbolzen 30 auf, welche sich in Richtung einer gemeinsamen Achse erstrecken. Die Gelenkbolzen 30 sind einstückig mit dem Deckel und dem Gelenkarm 22 aus Kunststoff ausgebildet und erstrecken sich von zwei einander entgegengesetzten Seiten des Gelenkarmes 22. Die Längsachse der Gelenkbolzen 30, welche sich parallel zur Seitenkante 32 des Deckels 4 erstreckt, bildet die Schwenkachse, um die der Deckel 4 aufgeklappt werden kann. Der Gelenkarm 22 ist gewinkelt ausgebildet, wobei sich ein erster dem Deckel 4 zugewandter Abschnitt des Gelenkarms 22 in Verlängerung der Ebene des Deckels 4 erstreckt. Der zweite, dem Gelenkbolzen 30 zugewandte Teil des Gelenkarmes 22 erstreckt sich abgewinkelt zur Ebene des Deckels 4 auf das Gehäuse 2 zu bzw. in dieses hinein. Die Ausnehmung 26 weist an zwei gegenüberliegenden Seitenwandungen Führungsnuten 24 auf, in welche die Gelenkbolzen 30 eingreifen, wenn der Deckel 4 mit dem Gehäuse 2 verbunden ist. Der Gelenkarm 22 mit den Gelenkbolzen 30 kann in der Richtung X in die Ausnehmung 26 eingesetzt werden, wobei die Gelenkbolzen 30 in die Führungsnuten 24 eingreifen. In den Führungsnuten 24 sind Rastnasen ausgebildet (siehe Fig. 4), welche die Gelenkbolzen 30 jeweils in der zugehörigen Führungsnut 24 sichern. Durch Herausziehen der Gelenkbolzen 30 in der Richtung X aus der Führungsnuten 24 kann der Deckel 4 von dem Gehäuse 2 getrennt werden. Die Ausnehmung 26 mit den Führungsnuten 24 bildet somit eine Rastaufnahme für den Hebelarm 2 mit den Gelenkbolzen 30.

Fig. 4 zeigt eine teilweise geschnittene Ansicht des Gelenks 16 gemäß Fig. 3, wobei das Gehäuse 2 geschnitten dargestellt ist. In Fig. 4 ist zu erkennen, dass in der Führungsnut 24 eine Rastnase bzw. ein Rastvorsprung 36 ausgebildet ist. Um den Deckel 4 mit dem Gehäuse 2 zu verbinden wird der Gelenkarm 22 mit den Gelenkbolzen 30 in die Ausnehmung 26 eingesetzt, wobei die Gelenkbolzen 30 in die Führungsnuten 24 eintreten. Beim Einsetzen bildet dabei ein Rastvorsprung 36 zunächst einen Widerstand, der überwunden werden muss. Da die Gelenkbolzen 30 sowie alle übrigen Teile aus Kunststoff ausgebildet sind, weisen sie eine ausreichende Elastizität auf, sodass die Gelenkbolzen 30 jeweils in Richtung der Führungsnut 24 über den zugehörigen Rastvorsprung 36 hinwegbewegt werden können, sodass der Gelenkbolzen 30 im hintergriffenen Zustand von dem Rastvorsprung 36 in der Führungsnut 24 gehalten wird. In diesem Zustand kann der Deckel 4 um die Gelenkbolzen 30 in den Führungsnuten 24 verschwenkt werden. Um das Einsetzen und Entnehmen zu erleichtern, können die Kanten des Rastvorsprunges 36 zusätzlich angeschrägt sein. Zum Trennen des Deckels 4 von dem Gehäuse 2 wird der Deckel 4 so von dem Gehäuse 2 wegbewegt, dass die Gelenkbolzen 30 aus den Führungsnuten 24 in deren Längsrichtung herausgezogen werden, wobei zum Überwinden der Rastvorsprünge 36 eine entsprechende Lösekraft aufgebracht werden muss.

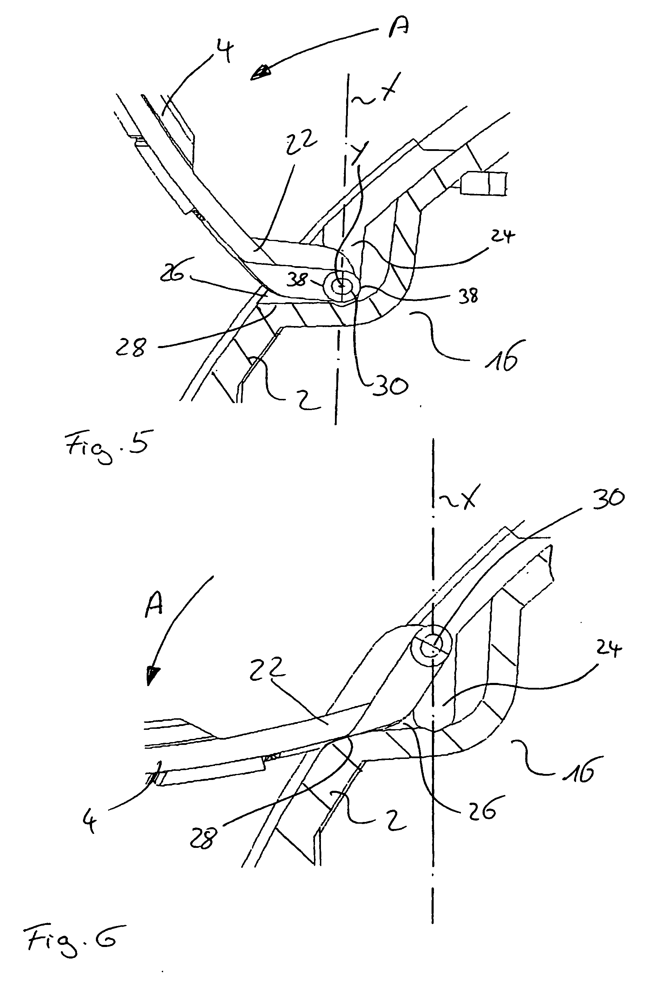

Die Bewegung des Deckels 4 relativ zu dem Gehäuse 2 wird anhand der Fig. 5 und 6 näher erläutert. Fig. 5 und 6 zeigen Schnittansichten des in Fig. 2 bis 4 dargestellten Gelenkes 16 zum Öffnen des Deckels 4. Wie in Fig. 1 gezeigt, wird dieser um die Gelenkbolzen 30, welche die Schwenkachse Y (siehe Fig. 1) definieren, in der Richtung des Pfeils A verschwenkt. Wie in Fig. 4, 5 und 6 zu erkennen ist, weisen die Gelenkbolzen 30 einen ovalen bzw. elliptischen Querschnitt auf. Dies bedeutet, dass die Gelenkbolzen 30 im Querschnitt in einer ersten Richtung einen größeren Durchmesser aufweisen als in einer um 90° versetzten Richtung. Dabei ist der kleine Durchmesser bzw. die Nebenachse des Querschnittes der Gelenkbolzen 30 auf die Breite der Führungsnut 24 so abgestimmt, dass der Gelenkbolzen 30 sich möglichst leicht in der zugehörigen Führungsnut 24 drehen kann. Das bedeutet der kleinere Durchmesser bzw. die Nebenachse des Gelenkbolzens 30 weist eine Länge auf, welche kleiner als die Breite der Führungsnut 24 ist. Der größere Durchmesser bzw. die Hauptachse des Querschnittes des Gelenkbolzens 30 weist eine Länge auf, welche gleich oder größer als die Breite der Führungsnut 24 ist. Dies bewirkt, dass in der in Fig. 5 gezeigten Position die beiden entgegengesetzten Umfangsflächen 38 in Richtung der Hauptachse des Querschnittes des Gelenkbolzens 30 an den gegenüberliegenden Seitenflächen der Führungsnut 24 klemmend zur Anlage kommen. Auf diese Weise wird der Deckel 4 in der geöffneten Stellung über die Gelenkbolzen 30 in den Führungsnuten 24 festgeklemmt, sodass er in der geöffneten Stellung gehalten wird. Je größer der Winkel der langen Durchmesserachse des Gelenkbolzens 30 zur Längsachse X der Führungsnut 24 wird, um so größer wird zwischen Gelenkbolzen 30 und Wandungen der Führungsnut 24 wirkende Klemmkraft, sodass die Bewegung des Deckels 4 aufgrund der Reibung beim Öffnen immer schwergängiger wird. Die maximale Klemmkraft wird erreicht, wenn sich die lange Durchmesserachse bzw. Hauptachse des Gelenkbolzenquerschnittes normal zur Längsachse X der Führungsnut 24 erstreckt.

Wenn der Deckel 4 über die in Figur 5 gezeigte geöffnete Stellung weiter in Richtung des Pfeils A hinausbewegt wird, kommt der Gelenkarm 22 an der Anschlagfläche 28 in der Ausnehmung 26 zur Anlage. Bei weiterer Bewegung in Richtung des Pfeils A dreht sich der Deckel 4 um die Anschlagfläche 28, wobei die Gelenkbolzen 30 in Richtung der Achse X aus den Führungsnuten 24 herausbewegt werden. Dabei werden die Gelenkbolzen 30 über die Rastvorsprünge 36 (siehe Fig. 4) hinwegbewegt, sodass sie aus den Führungsnuten 24 entnommen werden können. Auf diese Weise wird der Deckel 4 von dem Gehäuse 2 gelöst. Das Entnehmen der Gelenkbolzen 30 aus den Führungsnuten 24 wird dadurch erleichtert, dass bei weiterer Drehung des Deckels 4 um die Anlagefläche 28 die Hauptachse bzw. lange Querschnittachse des Gelenkbolzens 30 wieder aus der Ebene quer zur Längsachse X der Führungsnut 24 herausgedreht wird, sodass sich die auf die Gelenkbolzen 30 wirkende Klemmkraft in den Führungsnuten 24 wieder verringert. Zusätzlich sind die Führungsnuten 24 an Ihrem offenen Ende erweitert ausgebildet, sodass die Gelenkbolzen 30 leicht aus den Führungsnuten 24 heraustreten können und wieder in diese eingesetzt werden können.

Im gezeigten Beispiel wird der Deckel 4 durch weitere Drehung über die vollständig geöffnete Position hinaus aus dem Gelenk 16 ausgehebelt. Sollte in einer bestimmten Einbauposition kein ausreichender Platz vorhanden sein, um den Deckel 4 entsprechend weit zu öffnen, kann der Deckel auch im lediglich leicht geöffneten oder geschlossenen Zustand aus den Gelenken 16 herausgezogen werden, in dem der Deckel im Bereich seiner Seitenkante 32 bzw. in der Nähe der Gelenke 16 mit einem geeigneten Werkzeug untergriffen wird und die Gelenkbolzen 30 in Richtung der Achse X aus den Nuten 24 herausgezogen werden.

Sämtliche Teile, das heißt Gehäuse 2 und Deckel 4 sind als Spritzgussteile aus Kunststoff ausgebildet, was eine kostengünstige Fertigung ermöglicht. Die Ausnehmungen 26 mit den Führungsnuten 24 sind in dem Gehäuse 2 ausgeformt. Dabei sind die Führungsnuten 24 sowie die Ausnehmung 26 an ihrem Boden, das heißt an der dem Inneren des Gehäuses 2 zugewandten Seite vollständig geschlossen ausgebildet, sodass in diesem Bereich keine Öffnungen zum Inneren des Gehäuses 2 vorhanden sind, welche eine zusätzliche Abdichtung erforderlich machen würden. Auf diese Weise wird der Aufbau des Gehäuses 2 weiter vereinfacht. Zur Ausbildung der Rastnasen 36 sind Öffnungen 40 vorgesehen, welche sich quer zu den Führungsnuten 24 zur Außenseite des Gehäuses 2 erstrecken, und durch welche die beim Spritzguss erforderlichen Kerne eingesetzt werden können.

Vorangehend wurde nur ein Gelenk 16 im Detail beschrieben, da das zweite in Fig. 1 gezeigte Gelenk 16 identisch ausgebildet ist.

### Bezugszeichenliste

- 2: Gehäuse
- 4: Deckel
- 6: Innenseite
- 8: Außenseite
- 10: Öffnung
- 12: Anschlussklemmen
- 14: Kabeldurchführungen
- 16: Gelenke
- 18: Dichtung
- 20: Schraublöscher
- 22: Gelenkarm
- 24: Führungsnuten
- 26: Ausnehmung
- 28: Anschlagfläche
- 30: Gelenkbolzen
- 32: Seitenkante
- 36: Rastvorsprung
- 38: Umfangsfläche
- 40: Öffnungen
- X: Längsachse der Führungsnuten
- Y: Schwenkachse
- A: Bewegungsrichtung

## Patentansprüche

1. Klemmenkasten für ein Pumpenaggregat, welcher ein Gehäuse (2) und einen über zumindest ein Gelenk (16) schwenkbar mit dem Gehäuse verbundenen Deckel (4) aufweist, **dadurch gekennzeichnet, dass**
das Gelenk (16) zwischen Deckel (4) und Gehäuse (2) eine lösbare Rastverbindung (24, 30, 36) zum Trennen des Deckels (4) von dem Gehäuse (2) aufweist,
das Gelenk (16) zumindest einen Gelenkbolzen (30) aufweist, welcher um eine Achse (Y) schwenkbar in einer Rastaufnahme (24, 26) gelagert ist, wobei der Gelenkbolzen (30) zum Trennen von Deckel (4) und Gehäuse (2) in einer Richtung (X) quer zur Schwenkachse (Y) aus der Rastaufnahme (24, 36) entnehmbar ist,
und der Gelenkbolzen (30) einen ovalen Querschnitt aufweist.

2. Klemmenkasten nach Anspruch 1, **dadurch gekennzeichnet, dass** die Rastaufnahme als Nut (24) ausgebildet ist, in welche der Gelenkbolzen (30) in einer Richtung (X) quer zur Schwenkachse (Y) einsetzbar ist, wobei in der Nut (24) zumindest ein Rastvorsprung (36) ausgebildet ist, welcher den eingesetzten Gelenkbolzen (30) hintergreift.

3. Klemmenkasten nach einem der Ansprüche 1 oder 2, **dadurch gekennzeichnet, dass** die Rastaufnahme (24, 36) an dem Gehäuse (2) und der Gelenkbolzen (30) an dem Deckel (4) vorzugsweise jeweils einstückig mit diesen ausgebildet sind.

4. Klemmenkasten nach einem der Ansprüche 1 bis 3, **dadurch gekennzeichnet, dass** ein Anschlag (28) vorgesehen ist, welcher den Schwenkwinkel des Deckels (4) in seiner geöffneten Position begrenzt, wobei der Anschlag (28) so angeordnet ist, dass der Deckel (4) im geöffneten Zustand in einer Richtung normal zu der Schwenkachse (Y) beabstandet von dem Gelenkbolzen (30) an dem Anschlag (28) zur Anlage kommt.

5. Klemmenkasten nach Anspruch 4, **dadurch gekennzeichnet, dass** der Deckel (4) bei Anlage an dem Anschlag (28) weiter verschwenkbar ist, wobei der Anschlag (28) als Drehpunkt wirkt und der Gelenkbolzen (30) aus der Rastaufnahme (24, 36) herausbewegt wird.

6. Klemmenkasten nach einem der Ansprüche 1 bis 5, **dadurch gekennzeichnet, dass** das Getenk (16) einen Hebelarm (22) aufweist, von dessen zwei einander entgegengesetzten Seiten sich jeweils ein Gelenkbolzen (30) in Richtung der Schwenkachse (Y) erstreckt und jeweils in eine Nut (24) der Rastaufnahme (24, 36) eingreift.

7. Klemmenkasten nach Anspruch 6, **dadurch gekennzeichnet, dass** zwei Hebelarme (22) an zwei einander entgegengesetzten Enden einer Längskante (32) des Deckels (4) vorzugsweise einstückig mit diesem ausgebildet sind.

8. Klemmenkasten nach Anspruch 4 und einem der Ansprüche 6 oder 7, **dadurch gekennzeichnet, dass** der Anschlag (28) von einem Absatz (26) in dem Gehäuse (2) gebildet wird, an welchem im geöffneten Zustand des Deckels (4) ein Abschnitt des Hebelarmes (22) zur Anlage kommt.

9. Klemmenkasten nach Anspruch 8, **dadurch gekennzeichnet, dass** der Absatz (28) in der Nähe der Rastaufnahme (24, 36) ausgebildet ist.

## Claims

1. A terminal box for a pump unit, which comprises a housing (2) and a lid (4) which via at least one joint (16) is pivotally connected to the housing, **characterised in that**
the joint (16) between the lid (4) and the housing (2) comprises a releasable locking connection (24, 30, 36) for separating the lid (4) from the housing (2),
the joint (16) comprises at least one joint bolt (30) which is pivotally mounted about an axis (Y) in a locking receiver (24, 26), wherein the joint bolt (30) for separating the lid (4) and the housing (2) may be removed in a direction (X) transversely to the pivot axis (Y) out of the locking receiver (24, 36), and the joint bolt (30) comprises an oval cross section.

2. A terminal box according to claim 1, **characterised in that** the may be inserted in a direction (X) transversely to the pivot axis (Y), wherein at least one locking projection (36) is formed in the groove (24) and this engages behind the inserted joint bolt (30).

3. A terminal box according to one of the claims 1 or 2, **characterised in that** the locking receiver (24, 36) is formed on the housing (2), and the joint bolt (30) is formed on the lid (4), preferably in each case as one piece with these.

4. A terminal box according to one of the claims 1 to 3, **characterised in that** an abutment (28) is provided which limits the pivot angle of the lid (4) in its opened position, wherein the abutment (28) is arranged such that the lid (4) in the opened position in a direction normal to the pivot axis (Y) and distanced to the joint bolt (30) comes to bear on the abutment (28).

5. A terminal box according to claim 4, **characterised in that** the lid (4) on bearing on the abutment (28) may be pivoted further, wherein the abutment (28) acts as a fulcrum, and the joint bolt (30) is moved out of the locking receiver (24, 36).

6. A terminal box according to one of the claims 1 to 5, **characterised in that** the joint (16) comprises a lever arm (22) from whose two sides oppsed to one another in each case a joint bolt (30) extends in the direction of the pivot axis (Y) and in each case engages into a groove (24) of the locking receiver (24,36).

7. A terminal box according to claim 6, **characterised in that** two lever arms (22) are formed on two ends of a longitudinal edge (32) of the lid (4) which are opposed to one another, preferably formed as one piece with this lid.

8. A terminal box according to claim 4 and one of claims 6 or 7, **characterised in that** the abutment (28) is formed by a shoulder (26) in the housing (2), on which a section of the lever arm (22) comes to bear in the opened condition of the lid (4).

9. A terminal box according to claim 8, **characterised in that** the shoulder (28) is formed in the vicinity of the locking receiver (24, 36).

## Revendications

1. Boîtier à bornes pour un agrégat de pompe, qui présente un carter (2) et un couvercle (4) relié au carter de façon pivotante au moyen d'au moins une articulation (16), **caractérisé en ce que**
l'articulation (16) présente, entre le couvercle (4) et le carter (2), une liaison d'encliquetage (24, 30, 36) séparable pour la séparation du couvercle (4) du carter (2),
l'articulation (16) présente au moins une barrette d'articulation (30), qui est montée de façon pivotante autour d'un axe (Y), dans un logement d'encliquetage (24, 26), la barrette d'articulation (30) pouvant être enlevée du logement d'encliquetage (24, 36) pour séparer le couvercle (4) et le carter (2) dans une direction (X) transversalement à l'axe de pivotement (Y), et la barrette d'articulation (30) présentant une section ovale.

2. Boîtier à bornes selon la revendication 1, **caractérisé en ce que** le logement d'encliquetage est réalisé sous forme de rainure (24), dans laquelle la barrette d'articulation (30) peut être introduite dans une direction (X) transversalement à l'axe de pivotement (Y), au moins une saillie d'encliquetage (36), qui vient en prise avec la barrette d'articulation (30) inséré, étant prévue dans la rainure (24).

3. Boîtier à bornes selon l'une des revendications 1 ou 2, **caractérisé en ce que** le logement d'encliquetage (24, 36) sur le carter (2) et la barrette d'articulation (30) sur le couvercle (4) sont réalisés de préférence d'une seule pièce avec ceux-ci.

4. Boîtier à bornes selon l'une des revendications 1 à 3, **caractérisé en ce qu'**il est prévu une butée (28) qui limite l'angle de pivotement du couvercle (4) en position ouverte, la butée (28) étant disposée de telle sorte que le couvercle (4) vient, en position ouverte, en appui sur la butée (28) dans une direction perpendiculaire à l'axe de basculement (Y) et à distance de la barrette d'articulation (30).

5. Boîtier à bornes selon la revendication 4, **caractérisé en ce que** le couvercle (4) peut être davantage basculé lorsqu'il est en appui sur la butée (28), la butée (28) agissant comme un point de rotation et la barrette d'articulation (30) pouvant être sortie du logement d'encliquetage (24, 36).

6. Boîtier à bornes selon l'une des revendications 1 à 5, **caractérisé en ce que** l'articulation (16) présente un bras de levier (22), à partir de deux côtés opposés duquel une barrette d'articulation (30) s'étend respectivement en direction de l'axe de pivotement (Y) et s'engage respectivement dans une rainure (24) du logement d'encliquetage (24, 36).

7. Boîtier à bornes selon la revendication 6, **caractérisé en ce que** deux bras de levier (22) sont réalisés sur deux extrémités opposées d'un bord longitudinal (32) du couvercle (4), de préférence d'une seule pièce avec celui-ci.

8. Boîtier à bornes selon la revendication 4 et l'une des revendications 6 ou 7, **caractérisé en ce que** la butée (28) est formée par un décrochement (26) dans le carter (2), sur lequel une partie du bras de levier (22) vient s'appuyer lorsque le couvercle (4) est ouvert.

9. Boîtier à bornes selon la revendication 8, **caractérisé en ce que** le décrochement (28) est prévu à proximité du logement d'encliquetage (24, 36).
